# EUROPÄISCHE PATENTSCHRIFT

(11) **EP 4 150 755 B1**
(45) Veröffentlichungstag und Bekanntmachung des Hinweises auf die Patenterteilung: **29.01.2025**
(21) Anmeldenummer: 21722855.0
(22) Anmeldetag: 30.04.2021
(51) Int. Cl.: H02P 27/08, H02P 29/68

(54) **STEUERVORRICHTUNG UND STEUERVERFAHREN FÜR EIN ELEKTRISCHES ANTRIEBSSYSTEM UND ELEKTRISCHES ANTRIEBSSYSTEM**
CONTROL DEVICE AND CONTROL METHOD FOR AN ELECTRIC DRIVE SYSTEM, AND ELECTRIC DRIVE SYSTEM
DISPOSITIF DE COMMANDE ET PROCÉDÉ DE COMMANDE POUR UN SYSTÈME D'ENTRAÎNEMENT ÉLECTRIQUE, ET SYSTÈME D'ENTRAÎNEMENT ÉLECTRIQUE

(30) Priorität: 12.05.2020 DE 102020205919
(43) Veröffentlichungstag der Anmeldung: 22.03.2023
(73) Patentinhaber: Robert Bosch GmbH, 70442 Stuttgart (DE)
(72) Erfinder: BANGERTER, Michael, 71706 Markgroeningen (DE); SPRENGER, Helge, 70806 Kornwestheim (DE); ZELTWANGER, Thomas, 74379 Ingersheim (DE); ROSEN, Alexander, 49090 Osnabrueck (DE)
(86) Internationale Anmeldenummer: PCT/EP2021/061406
(87) Internationale Veröffentlichungsnummer: WO 2021/228583

(56) Entgegenhaltungen:
- EP-A1- 3 185 408
- WO-A1-2019/123911
- DE-A1- 102015 201 301
- DE-A1- 102017 117 720
- DE-A1- 102017 202 395

## Beschreibung

Die vorliegende Erfindung betrifft eine Vorrichtung und ein Verfahren zur Steuerung für ein elektrisches Antriebssystem. Ferner betrifft die vorliegende Erfindung ein elektrisches Antriebssystem.

### Stand der Technik

Elektrische Antriebssysteme werden beispielsweise in ganz oder zumindest teilweise elektrisch angetriebenen Fahrzeugen eingesetzt. Dabei wird elektrische Energie von einer sogenannten Traktionsbatterie bereitgestellt und mittels eines elektrischen Stromrichters in eine Wechselspannung konvertiert, die dazu geeignet ist, die elektrische Maschine gemäß den gewünschten Soll-Wert-Vorgaben zu betreiben.

Die Druckschrift DE 10 2017 203 668 A1 beschreibt ein Verfahren und eine Vorrichtung zum Betreiben eines Wechselrichters für ein Antriebssystem. Das hierbei vorgestellte Verfahren umfasst einen Schritt zum Bestimmen einer Schaltfrequenz für den Wechselrichter unter Verwendung eines Arbeitspunktesignals. Das Verfahren weist ferner einen Schritt zum Bereitstellen eines Frequenzsignals auf, um an dem Wechselrichter eine vorgegebene Schaltfrequenz einzustellen. Die Druckschriften DE 10 2017 202395 A1, DE 10 2015 201301 A1, EP 3 185 408 A1 und DE 10 2017 117720 A1 offenbaren Steuervorrichtungen und Steuerverfahren für ein elektrisches Antriebssystem.

### Offenbarung der Erfindung

Die vorliegende Erfindung schafft eine Vorrichtung und ein Verfahren zur Steuerung eines Spannungswandlers sowie ein elektrisches Antriebssystem mit den Merkmalen der unabhängigen Patentansprüche. Weitere vorteilhafte Ausführungsformen sind Gegenstand der abhängigen Patentansprüche.

### Demgemäß ist vorgesehen:

Eine Steuervorrichtung für ein elektrisches Antriebssystem, insbesondere ein elektrisches Antriebssystem mit einem Stromrichter und einer elektrischen Maschine. Die Steuervorrichtung umfasst eine Überwachungseinrichtung und eine Steuereinrichtung. Die Überwachungseinrichtung ist dazu ausgelegt, eine Temperatur in einem Rotor der elektrischen Maschine zu ermitteln. Die Steuereinrichtung ist dazu ausgelegt, Steuersignale zur Ansteuerung des Spannungswandlers zu generieren. Insbesondere ist die Steuereinrichtung dazu ausgelegt, die Steuersignale gemäß einem vorbestimmten Modulationsverfahren zu generieren und an dem Spannungswandler bereitzustellen. Die Steuereinrichtung ist ferner dazu ausgelegt, das Modulationsverfahren unter Verwendung der ermittelten Temperatur in dem Rotor anzupassen.

### Weiterhin ist vorgesehen:

Ein elektrisches Antriebssystem mit einer elektrischen Maschine, einem Stromrichter, der dazu ausgelegt ist, die elektrische Maschine anzusteuern, und einer erfindungsgemäßen Steuervorrichtung.

### Schließlich ist vorgesehen:

Ein Verfahren zur Ansteuerung eines elektrischen Antriebssystems mit einem Stromrichter und einer elektrischen Maschine. Das Verfahren umfasst einen Schritt zum Betreiben des Spannungswandlers mit einem vorbestimmten Modulationsverfahren. Weiterhin umfasst das Verfahren einen Schritt zum Ermitteln einer Temperatur in dem Rotor der elektrischen Maschine. Darüber hinaus umfasst das Verfahren einen Schritt zum Anpassen des Modulationsverfahrens unter Verwendung der ermittelten Temperatur in dem Rotor der elektrischen Maschine.

### Vorteile der Erfindung

Der vorliegenden Erfindung liegt die Erkenntnis zugrunde, dass die Wahl des Modulationsverfahrens sowie die Taktrate bzw. Schaltfrequenz für das Ansteuern der Schaltelemente in einem Spannungswandler Einfluss auf die Temperaturentwicklung in einer elektrischen Maschine haben. Zur Vermeidung von kritischen Betriebszuständen, insbesondere zur Vermeidung einer unzulässigen Temperaturerhöhung im Rotor einer elektrischen Maschine werden daher bei der Ansteuerung des Spannungswandlers eines elektrischen Antriebssystems hohe Toleranzen eingeplant. Beispielsweise kann die Ansteuerung des Spannungswandlers derart konzipiert werden, dass zur Vermeidung einer Überbeanspruchung beim Dauerbetrieb bestimmte Modulationsverfahren nicht verwendet werden, obwohl sie beispielsweise bezüglich des Wirkungsgrads oder anderer Eigenschaften zu bevorzugen wären.

Da im Betrieb die kritischen Rotortemperaturen jedoch in der Regel nur sehr selten und unter ungünstigen Bedingungen auftreten, ist es eine Idee der vorliegenden Erfindung, die Wahl des Ansteuerverfahrens sowie die Parametrisierung des gewählten Ansteuerungsverfahrens in Abhängigkeit der Rotortemperatur in einer elektrischen Maschine dynamisch anzupassen. Auf diese Weise kann einerseits das elektrische Antriebssystem bei kritischen Beanspruchungen vor einer gefährlichen Temperaturüberhöhung, insbesondere einer Temperaturüberhöhung im Rotor der elektrischen Maschine bewahrt werden. Andererseits ist es möglich, außerhalb dieser speziellen kritischen Betriebsbedingungen auf unverhältnismäßig hohe Sicherheitszuschläge zu verzichten und somit das elektrische Antriebssystem in einem vorteilhafteren und insbesondere effizienteren Betriebsmodus anzusteuern. Somit kann das elektrische Antriebssystem vor Überbeanspruchungen aufgrund von zu hohen Temperaturen geschützt werden. Darüber hinaus ist ein effizienter Betrieb des elektrischen Antriebssystems möglich. Durch den Betrieb des elektrischen Antriebssystems bei einem höheren Wirkungsgrad sinken somit auch die Gesamtverluste, was somit auch zu einer geringeren Temperaturentwicklung des Gesamtsystems führt. Auf diese Weise können gegebenenfalls auch weitere Baugruppen des elektrischen Antriebssystems weniger beansprucht werden.

Wie nachfolgend noch näher erläutert wird, kann die Rotortemperatur der elektrischen Maschine auf beliebige Weise ermittelt werden. Beispielsweise ist es möglich, mittels geeigneter Temperatursensoren die Rotortemperatur direkt oder indirekt zu messen und entsprechende Sensorsignale bereitzustellen. Zusätzlich oder alternativ ist es auch möglich, die Temperaturentwicklung im Rotor der elektrischen Maschine zu modellieren und basierend auf einem mathematischen Modell zu berechnen. Hierzu können beispielsweise Sensorsignale herangezogen werden, welche indirekt einen Rückschluss auf die Temperaturentwicklung im Rotor der elektrischen Maschine geben können. Beispielsweise können hierzu elektrische Spannungen und/oder Ströme innerhalb des Antriebssystems erfasst werden. Darüber hinaus können auch Soll-Wert-Vorgaben oder ähnliches mit in die Berechnung der Temperaturentwicklung im Rotor der elektrischen Maschine einbezogen werden.

Das elektrische Antriebssystem umfasst einen Spannungswandler, der eine Eingangsspannung, beispielsweise eine elektrische Gleichspannung von einem Energiespeicher, wie zum Beispiel der Traktionsbatterie eines Elektrofahrzeugs, in eine elektrische Spannung konvertiert, die dazu geeignet ist, die elektrische Maschine anzusteuern. Hierzu können in dem Spannungswandler beispielsweise eine oder mehrere Halbbrücken mit jeweils zwei Halbleiterschaltelementen vorgesehen sein. Bei den Halbleiterschaltelementen kann es sich beispielsweise um bipolare Transistoren mit einem isolierten Gateanschluss, MOSFET-Schaltelemente oder Schaltelemente auf Basis von Siliziumkarbid (SiC) handeln. Die Schaltelemente können beispielsweise mit einer vorgegebenen Schaltfrequenz bzw. Taktrate geöffnet und geschlossen werden. Durch die Variation des Tastverhältnisses zwischen Einschaltzeitdauer und Periodendauer bei der Ansteuerung der Schaltelemente kann die elektrische Spannung am Ausgang des Spannungswandlers eingestellt werden. Die Wahl der Schaltfrequenz kann dabei durch mehrere Faktoren beeinflusst werden. So führt beispielsweise eine hohe Schaltfrequenz zu hohen Schaltverlusten innerhalb des Spannungswandlers. Andererseits führt eine hohe Schaltfrequenz in der Regel aufgrund von geringeren Oberschwingungen zu niedrigeren Verlusten in der elektrischen Maschine. Darüber hinaus hat die Wahl der Schaltfrequenz auch Einfluss auf die Geräuschentwicklung des elektrischen Antriebssystems. Neben diesen Faktoren beeinflusst die Wahl der Schaltfrequenz auch aufgrund der Verluste der elektrischen Maschine die Rotortemperatur.

Neben der Variation der Schaltfrequenz ist es darüber hinaus auch möglich, zwischen verschiedenen Modulationsverfahren für die Ansteuerung der Schaltelemente in dem Spannungswandler zu wählen. Ein solches Modulationsverfahren ist beispielsweise die sogenannte Raumzeiger-Pulsbreitenmodulation (Englisch: Space Vector Pulse Width Modulation, SVPWM). Darüber hinaus können beispielsweise zur Reduktion der Schaltvorgänge auch spezielle Modulationsverfahren, wie beispielsweise das sogenannte Flat-Top-Verfahren oder ein sogenannter Blockbetrieb eingesetzt werden. Ferner ist es beispielsweise auch möglich, den Wirkungsgrad des elektrischen Antriebssystems durch eine sogenannte Übermodulation zu optimieren.

Durch eine geeignete Wahl des Modulationsverfahrens sowie die dabei verwendete Schaltfrequenz kann somit der Betrieb des elektrischen Antriebssystems optimiert werden. Dabei kann insbesondere durch das Berücksichtigen der Rotortemperatur bei der Wahl des Modulationsverfahrens und der verwendeten Schaltfrequenz das elektrische Antriebssystem mit einem hohen Wirkungsgrad und einer hohen Effizienz betrieben werden, ohne dabei eine Überbeanspruchung aufgrund einer zu hohen Rotortemperatur in Kauf nehmen zu müssen.

Gemäß einer Ausführungsform ist die Überwachungseinrichtung dazu ausgelegt, die Temperatur in dem Rotor der elektrischen Maschine zu berechnen. Zusätzlich oder alternativ kann die Überwachungseinrichtung auch dazu ausgelegt sein, die Temperatur im Rotor der elektrischen Maschine unter Verwendung von Messwerten zu bestimmen. Wie oben bereits ausgeführt, kann die Berechnung der Rotortemperatur mittels einer geeigneten Simulation und auf Grundlage eines mathematischen Modells berechnet werden. Auf diese Weise ist eine Schätzung der Rotortemperatur möglich. Ferner kann die Rotortemperatur direkt oder indirekt auf Basis von Sensorwerten bestimmt werden. Hierzu können beispielsweise direkt Temperatursensoren eingesetzt werden. Alternativ ist es auch möglich, die Rotortemperatur unter Verwendung von weiteren Messwerten, wie beispielsweise Strömen oder Spannungen zu ermitteln.

Gemäß einer Ausführungsform ist die Steuereinrichtung dazu ausgelegt, eine Schaltfrequenz der Steuersignale zur Ansteuerung des Spannungswandlers unter Verwendung der Temperatur im Rotor anzupassen. Durch ein solches Anpassen der Schaltfrequenz für die Ansteuerung der Halbleiterschaltelemente in einem Spannungswandler ist es möglich, die elektrische Maschine in einem möglichst effizienten Betriebsmodus zu betreiben, und dabei gleichzeitig eine übermäßige Erhöhung der Rotortemperatur zu vermeiden.

Gemäß einer Ausführungsform ist die Steuereinrichtung dazu ausgelegt, eine Schaltfrequenz der Steuersignale zur Ansteuerung des Spannungswandlers zu erhöhen, falls die Temperatur in dem Rotor der elektrischen Maschine einen vorgegebenen Grenzwert überschreitet. Entsprechend kann die Steuereinrichtung auch niedrigere Schaltfrequenzen zur Ansteuerung des Spannungswandlers zulassen, falls die Temperatur in dem Rotor der elektrischen Maschine einen entsprechenden weiteren Grenzwert unterschreitet. Auf diese Weise kann einerseits eine zu große Temperaturerhöhung im Rotor der elektrischen Maschine vermieden werden, und gleichzeitig kann ein möglichst effizienter Betrieb der elektrischen Maschine erreicht werden, da beispielsweise die Schaltverluste im Spannungswandler mit sinkender Schaltfrequenz ebenfalls sinken.

Gemäß einer Ausführungsform ist die Steuereinrichtung dazu ausgelegt, die Schaltfrequenz der Steuersignale zur Ansteuerung des Spannungswandlers innerhalb eines vorbestimmten Regelbereiches einzustellen. Dabei kann die Steuereinrichtung dazu ausgelegt sein, den vorbestimmten Regelbereich unter Verwendung der Temperatur in dem Rotor der elektrischen Maschine anzupassen. Insbesondere kann die Steuereinrichtung beispielsweise die minimale - und gegebenenfalls auch maximale - zulässige Schaltfrequenz auf Basis der aktuellen Temperatur im Rotor der elektrischen Maschine festlegen. Innerhalb dieses Regelbereiches kann daraufhin der Betrieb des elektrischen Antriebssystems gemäß weiterer Rahmenbedingungen eingestellt und optimiert werden.

Gemäß einer Ausführungsform ist die Steuereinrichtung dazu ausgelegt, in Abhängigkeit der ermittelten Temperatur im Rotor der elektrischen Maschine zwischen mehreren vorgegebenen Modulationsverfahren zu wechseln. Wie bereits zuvor ausgeführt, können die Modulationsverfahren neben einer Raumzeiger-Pulsbreitenmodulation auch weitere Modulationsverfahren, wie beispielsweise eine Ansteuerung gemäß dem sogenannten Flat-Top-Verfahren oder eine Ansteuerung im Blockbetrieb umfassen. Selbstverständlich sind auch beliebige weitere Modulationsverfahren möglich. Darüber hinaus kann auch eine sogenannte Übermodulation für hierfür geeignete Modulationsverfahren auf Grundlage der aktuellen Temperatur im Rotor der elektrischen Maschine angepasst werden.

Gemäß einer Ausführungsform ist die Steuereinrichtung dazu ausgelegt, einen Grad der Übermodulation für die Ansteuerung des Spannungswandlers unter Verwendung der ermittelten Temperatur im Rotor der elektrischen Maschine anzupassen. Insbesondere kann die Übermodulation bei steigender Rotortemperatur abgesenkt werden. So kann beispielsweise eine Übermodulation vollständig unterbunden werden, wenn eine vorbestimmte Temperatur im Rotor der elektrischen Maschine überschritten wird. Andererseits kann eine Übermodulation zugelassen werden, wenn die Temperatur im Rotor der elektrischen Maschine einen entsprechenden Grenzwert unterschreitet. Durch die Übermodulation kann beispielsweise ein höherer Gesamtwirkungsgrad erreicht werden, wobei jedoch durch die Übermodulation der Rotor der elektrischen Maschine gegebenenfalls stärker thermisch beansprucht wird.

Gemäß einer Ausführungsform ist die Steuereinrichtung dazu ausgelegt, das Modulationsverfahren unter Verwendung mindestens eines weiteren Parameters anzupassen. Beispielsweise kann für die Wahl des Modulationsverfahrens und/oder die verwendete Schaltfrequenz zusätzlich ein maximal zulässiger Spannungsrippel am Eingang des Spannungswandlers, eine gewünschte Geräuschentwicklung des elektrischen Antriebssystems oder ein beliebiger weiterer Betriebsparameter mit in Betracht gezogen werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der vorliegenden Erfindung hinzufügen.

### Kurze Beschreibung der Zeichnungen

Die vorliegende Erfindung wird nachfolgend anhand der in schematischen Figuren der Zeichnungen angegebenen Ausführungsbeispiele näher erläutert. Dabei zeigen:
- Figur 1:: eine schematische Darstellung eines Blockschaubilds eines elektrischen Antriebssystems mit einer Steuervorrichtung gemäß einer Ausführungsform;
- Figur 2:: eine schematische Darstellung für das Einstellen von Betriebsparameter in Abhängigkeit der Rotortemperatur gemäß einer Ausführungsform; und
- Figur 3:: ein Ablaufdiagramm, wie es einem Verfahren zur Ansteuerung eines elektrischen Antriebssystems gemäß einer Ausführungsform zugrunde liegt.

### Beschreibung der Ausführungsformen

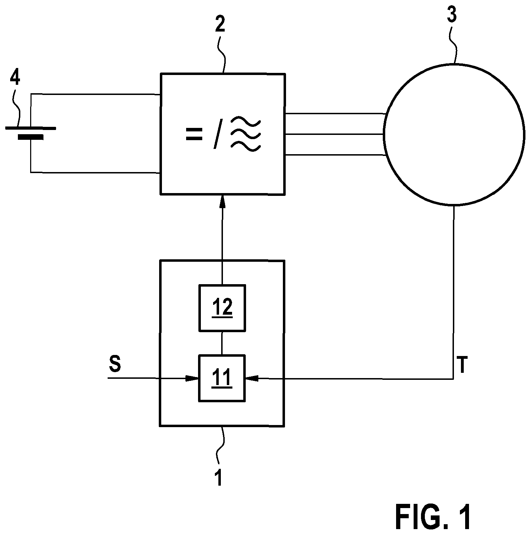

Figur 1 zeigt eine schematische Darstellung eines Blockschaubilds eines elektrischen Antriebssystems gemäß einer Ausführungsform. Das elektrische Antriebssystem umfasst eine elektrische Maschine 3. Die elektrische Maschine 3 kann von einem Stromrichter, insbesondere einem ein- oder mehrphasigen Wechselrichter 2 gespeist werden. Der Stromrichter 2 wird eingangsseitig von einer elektrischen Energiequelle 4, insbesondere von einem elektrischen Energiespeicher, wie beispielsweise der Traktionsbatterie eines Elektrofahrzeugs gespeist. Der Stromrichter 2 konvertiert die von elektrischen Energiequelle 4 bereitgestellte elektrische Energie in eine elektrische Spannung, die dazu geeignet ist, an der elektrischen Maschine 3 einen gewünschten Betriebszustand, beispielsweise eine gewünschte Drehfrequenz oder ein gewünschtes Drehmoment einzustellen. Hierzu kann der Stromrichter 2 mehrere Schaltelemente, insbesondere Halbleiterschaltelemente, wie beispielsweise bipolare Transistoren mit einem isolierten Gateanschluss (IGBT) oder Siliziumkarbid-Transistoren oder ähnliches umfassen. Die Schaltelemente des Stromrichters 2 können mittels geeigneter Steuersignale geöffnet und geschlossen werden. Hierzu können die einzelnen Schaltelemente des Stromrichters 2 mittels entsprechender Steuersignale angesteuert werden. Diese Steuersignale können beispielsweise von der Steuervorrichtung 1 bereitgestellt werden. Insbesondere können die Steuersignale mit einer vorbestimmten Taktfrequenz generiert werden. Insbesondere können die Halbleiterschaltelemente mittels Pulsbreitenmodulation (Englisch: Pulse Width Modulation, PWM) angesteuert werden. Die Vorgaben für das Einstellen eines bestimmten Betriebszustandes wie Drehfrequenz oder Drehmoment können beispielsweise mittels entsprechender Sollwertvorgaben S an der Steuervorrichtung 1 bereitgestellt werden.

In dem Spannungswandler 2 können beispielsweise eine oder mehrere Halbbrücken (hier nicht dargestellt) vorgesehen sein. Insbesondere kann für jede elektrische Phase auf der Ausgangsseite des Spannungswandlers 2 eine Halbbrücke vorgesehen sein. Jede Halbbrücke kann hierbei beispielsweise zwei Halbleiterschaltelemente umfassen.

Die einzelnen Halbleiterschaltelemente können gemäß einem vorgegebenen Schaltschema angesteuert, das heißt geöffnet und geschlossen werden. Hierzu kann an den Steueranschlüssen der Halbleiterschalter jeweils ein geeignetes Steuersignal bereitgestellt werden. Diese Steuersignale können beispielsweise von der Vorrichtung 1 zur Steuerung des Spannungswandlers 2 bereitgestellt werden.

Üblicherweise werden die einzelnen Schaltelemente des Spannungswandlers 2 periodisch geöffnet und geschlossen. Hierzu kann entweder eine winkelsynchrone oder zeitsynchrone Taktung verwendet werden. Bei einer winkelsynchronen Taktung kann die Periodendauer entsprechend der Phasengeschwindigkeit bzw. der Drehfrequenz einer angeschlossenen elektrischen Maschine 3 angepasst werden. Bei einer zeitsynchronen Taktung dagegen ist die Periodendauer unabhängig von der Phasengeschwindigkeit bzw. Drehfrequenz der elektrischen Maschine 3. In Regel erfolgen in jeder Periode des jeweiligen Zeitrasters ein Öffnen und ein Schließen des jeweiligen Schaltelements des Spannungswandlers 2. Durch Variation des Tastverhältnisses kann die effektive Spannungshöhe am Ausgang des Spannungswandlers 2 eingestellt werden. Eine solche Variation des Tastverhältnisses ist auch unter dem Begriff "Pulsbreitenmodulation" (Englisch: Pulse Width Modulation - PWM) bekannt.

Die Vorrichtung 1 zur Steuerung des Spannungswandlers 2 kann auf Grundlage eines vorgegebenen Sollwertes S die Schaltelemente des Spannungswandlers 2 gemäß einem geeigneten Tastverhältnis ansteuern. Gegebenenfalls können für die Berechnung eines geeigneten Tastverhältnisses auch noch weitere Parameter, beispielsweise ein Messwert der aktuellen Ausgangsspannung oder ähnliches berücksichtigt werden.

Die Vorrichtung 1 zur Steuerung des Spannungswandlers 2 umfasst eine Überwachungseinrichtung 11, welche unter anderem die Temperatur im Rotor der elektrischen Maschine 3 ermittelt. Hierzu kann die Überwachungseinrichtung 11 beispielsweise Sensorwerte von geeigneten Temperatursensoren empfangen, welche direkt oder indirekt Aufschluss auf die Temperatur im Rotor der elektrischen Maschine 3 geben. Zusätzlich oder alternativ ist es auch möglich, die Temperatur im Rotor der elektrischen Maschine 3 zu schätzen bzw. zu berechnen. Hierzu kann die Temperaturentwicklung im Rotor beispielsweise auf Grundlage eines mathematischen Modells simuliert oder berechnet werden. Für diese Berechnung können beispielsweise Soll-Wert-Vorgaben für die Ansteuerung des elektrischen Antriebssystems und/oder weitere Messwerte, wie beispielsweise elektrische Ströme oder Spannungen mit einbezogen werden.

Die durch die Überwachungseinrichtung 11 ermittelte Temperatur des Rotors der elektrischen Maschine 3 kann dazu verwendet werden, die Generierung der Steuersignale für den Spannungswandler 2 zu steuern. Gegebenenfalls können darüber hinaus auch noch weitere geeignete Parameter mit berücksichtigt werden. Beispielsweise kann die Steuereinrichtung 12, welche die Steuersignale für die Ansteuerung des Spannungswandlers 2 generiert, die Schaltfrequenz bzw. die Taktrate für die Ansteuerung der einzelnen Schaltelemente in dem Spannungswandler 2 unter Verwendung der Rotortemperatur einstellen. Beispielsweise kann hierzu die Steuereinrichtung 12 die Schaltfrequenz für die Ansteuerung der Schaltelemente in dem Spannungswandler 2 erhöhen, falls die Temperatur des Rotors in der elektrischen Maschine 3 ansteigt bzw. einen vorgegebenen Schwellwert überschreitet. Entsprechend kann bei einem Absinken der Rotortemperatur, beispielsweise unter einen weiteren Schwellwert, die Schaltfrequenz entsprechend abgesenkt werden. Das Erhöhen bzw. Senken der Schaltfrequenz kann dabei stufenweise, also in diskreten Schritten, erfolgen. Alternativ ist auch ein mehr oder weniger kontinuierliches Erhöhen bzw. Senken der Schaltfrequenz in Abhängigkeit der Rotortemperatur möglich.

Die Ansteuerung der Schaltelemente in dem Spannungswandler 2 kann auf Grundlage von unterschiedlichen Ansteuerungs- bzw. Modulationsverfahren erfolgen. Ein solches Modulationsverfahren ist beispielsweise unter dem Begriff "Raumzeigermodulation" (Englisch: Space Vector Pulse Width Modulation, SVPWM) bekannt. Darüber hinaus existieren weitere Ansteuerungs- bzw. Modulationsverfahren, beispielsweise das sogenannte Flat-Top-Verfahren oder ein sogenannter Blockbetrieb. Selbstverständlich sind grundsätzlich auch beliebige weitere geeignete Verfahren zur Ansteuerung des Spannungswandlers 2 möglich. Da diese unterschiedlichen Ansteuerungs- bzw. Modulationsverfahren auch unterschiedliche Eigenschaften bezüglich der Temperaturentwicklung im Rotor der elektrischen Maschine sowie auch Einfluss auf weitere Komponenten des elektrischen Antriebssystems haben, kann durch eine geeignete Wahl des Modulationsverfahrens auch Einfluss auf die Rotortemperatur genommen werden. Entsprechend kann die Steuereinrichtung 12 das jeweilige Modulationsverfahren in Abhängigkeit der ermittelten Rotortemperatur auswählen und anwenden. So kann beispielsweise bei niedrigen Rotortemperaturen vorzugsweise das Flat-Top-Verfahren oder der Blockbetrieb eingesetzt werden. Diese Verfahren führen in der Regel zu geringeren elektrischen Verlusten in dem Spannungswandler 2. Jedoch können sie zu einer höheren thermischen Belastung im Rotor der elektrischen Maschine führen. Entsprechend kann bei höheren Rotortemperaturen, beispielsweise beim Überschreiten einer vorgegebenen Grenztemperatur, auf ein anderes Modulationsverfahren, beispielsweise SVPWM, gewechselt werden. Hierdurch entstehen gegebenenfalls höhere Schaltverluste im Spannungswandler 2, jedoch eine geringere thermische Belastung im Rotor der elektrischen Maschine.

Darüber hinaus kann auch durch eine Übermodulation Einfluss auf die verschiedenen Eigenschaften wie Effizienz und Temperaturentwicklung im Rotor genommen werden. So führt eine Übermodulation in der Regel zu einem höheren Wirkungsgrad, jedoch auch zu höheren thermischen Belastungen im Rotor der elektrischen Maschine 3. Entsprechend kann beim Überschreiten der Rotortemperatur über einen Grenzwert eine Übermodulation unterbunden werden, während unterhalb eines Grenzwertes die Ansteuerung mit Übermodulation erfolgen kann.

Die Einstellung des Modulationsverfahrens kann neben der Berücksichtigung der Rotortemperatur auch noch auf Grundlage eines oder mehrerer weiterer Parameter eingestellt werden. Beispielsweise können auch Anforderungen bezüglich eines durch den Betrieb des Spannungswandlers 2 am Eingang des Spannungswandlers 2 auftretenden Spannungsrippels Einfluss auf die Wahl des Modulationsverfahrens und/oder die Schaltfrequenz haben. Darüber hinaus kann beispielsweise auch eine gewünschte Geräuschentwicklung des Antriebssystems Einfluss auf Schaltfrequenz bzw. Modulationsverfahren haben. Entsprechend kann die Steuereinrichtung 12 für die Auswahl des jeweiligen Ansteuerungs- bzw. Modulationsverfahrens sowie die verwendete Schaltfrequenz neben der Rotortemperatur auch diese weiteren Parameter mit berücksichtigen. Die Regelung kann hierbei beispielsweise auf Grundlage von vorab ermittelten und in der Steuervorrichtung 1 abgespeicherten Kennlinien erfolgen. Beispielsweise kann die Steuereinrichtung 12 auf Grundlage der Rotortemperatur zunächst einen Regelbereich für die Schaltfrequenz vorgeben, und darauf kann die Steuereinrichtung 12 die aktuelle Schaltfrequenz innerhalb dieses Regelbereiches einstellen.

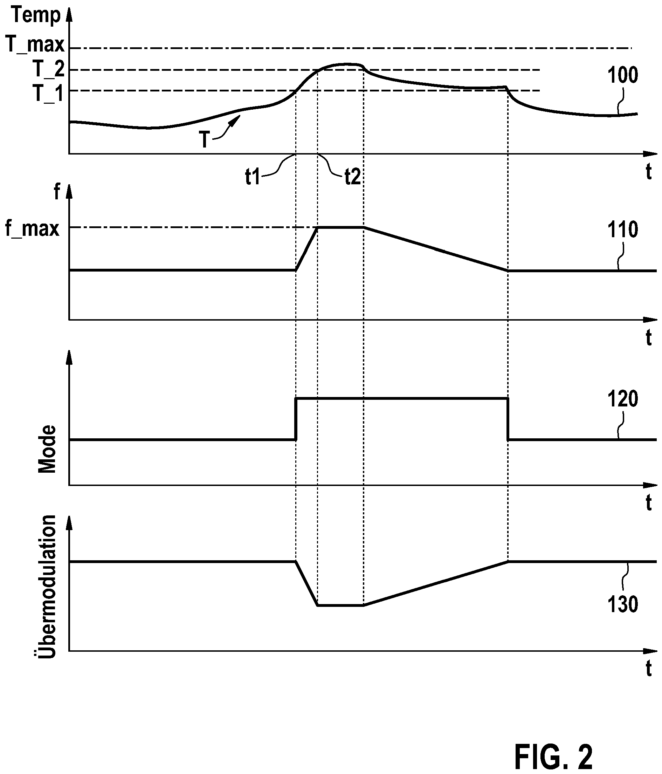

Figur 2 zeigt eine schematische Darstellung für das Einstellen von Betriebsparametern in Abhängigkeit einer Temperatur im Rotor einer elektrischen Maschine 3 gemäß einer Ausführungsform. Im oberen Diagramm ist der Temperaturverlauf 100 im Rotor der elektrischen Maschine 3 dargestellt. Im darunter dargestellten Diagramm ist ein möglicher Verlauf 110 der Schaltfrequenz dargestellt. Im dritten Diagramm ist ein möglicher Wechsel zwischen verschiedenen Modulations- bzw. Ansteuerverfahren als Kurvenverlauf 120 dargestellt. Im letzten Diagramm ist ein möglicher Verlauf 130 einer Übermodulation für die Ansteuerung des Spannungswandlers 2 dargestellt.

Wie in diesen Diagrammen zu erkennen ist, überschreitet zum Zeitpunkt t1 die Rotortemperatur einen ersten Grenzwert T_1. Beim Überschreiten dieses Grenzwertes sind verschiedene Maßnahmen möglich. Beispielsweise kann die Schaltfrequenz für die Ansteuerung der Schaltelemente im Spannungswandler 2 angehoben werden. Zusätzlich oder alternativ kann beispielsweise das Modulations- bzw. Ansteuerverfahren gewechselt werden. Ferner ist es auch möglich, die Übermodulation des verwendeten Modulationsverfahrens herabzusetzen. Die einzelnen Maßnahmen können entweder gemeinsam, einzeln oder in einer beliebigen Kombination ausgeführt werden. Dabei können Maßnahmen wie die Variation der Schaltfrequenz oder das Anpassen der Übermodulation entweder kontinuierlich in Abhängigkeit des Temperaturanstiegs im Rotor, in Stufen oder in binarer Form (Wechsel zwischen zwei fest vorgegebenen Werten) erfolgen. Zum Zeitpunkt t2 erreicht die Rotortemperatur einen zweiten Grenzwert T_2. Beim Erreichen dieses zweiten Grenzwertes kann die Schaltfrequenz zum Beispiel auf die maximale Schaltfrequenz innerhalb des Regelbereiches eingestellt werden. Ferner kann vollständig auf Übermodulation verzichtet werden. Diese Einstellungen können beispielsweise beibehalten werden, bis ein entsprechender Grenzwert der Rotortemperatur wieder unterschritten wird. Anschließend können kontinuierlich oder in Schritten die entsprechenden Einstellungen für eine höhere Effizienz (verbunden mit einer gegebenenfalls höheren thermischen Belastung des Rotors) angepasst werden, bis eine untere Grenztemperatur T_1 erreicht ist.

Auf diese Weise kann das elektrische Antriebssystem mit einer möglichst hohen Effizienz und gegebenenfalls gemäß weiterer gewünschter Rahmenbedingungen betrieben werden, solange die Rotortemperatur einen solchen Betrieb zulässt. Darüber hinaus kann durch das Anpassen der geeigneten Betriebsparameter, insbesondere die Wahl des Modulationsverfahrens sowie der Schaltfrequenz in dem jeweiligen Modulationsverfahren der Betrieb des elektrischen Antriebssystems derart angepasst werden, dass die thermische Belastung im Rotor der elektrischen Maschine 3 nicht ein zulässiges Maß überschreitet.

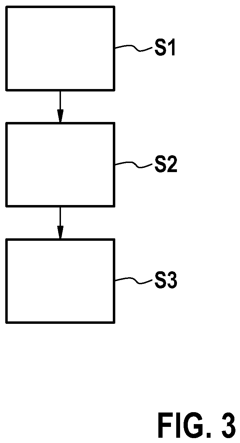

Figur 3 zeigt eine schematische Darstellung eines Ablaufdiagramms, wie es einem Verfahren zur Ansteuerung eines elektrischen Antriebssystems gemäß einer Ausführungsform zugrunde liegt. Das Verfahren kann grundsätzlich beliebige Schritte umfassen, wie sie zuvor bereits im Zusammenhang mit dem elektrischen Antriebssystem beschrieben worden sind. Entsprechend kann das elektrische Antriebssystem, insbesondere die Steuervorrichtung 1, auch beliebige Komponenten umfassen, die zur Realisierung des nachfolgend beschriebenen Verfahrens erforderlich sind.

In Schritt S1 wird ein Spannungswandler 2 des elektrischen Antriebssystems mit einem vorbestimmten Modulationsverfahren betrieben. In Schritt S2 wird eine Temperatur des Rotors der elektrischen Maschine 3 des elektrischen Antriebssystems ermittelt. Daraufhin kann in Schritt S3 das Modulationsverfahren für den Betrieb des Antriebssystems angepasst werden. Insbesondere kann die Anpassung des Modulationsverfahrens unter Verwendung der ermittelten Temperatur des Rotors der elektrischen Maschine angepasst werden.

Zusammenfassend betrifft die vorliegende Erfindung die Ansteuerung eines elektrischen Antriebssystems. Hierbei ist es vorgesehen, die Rotortemperatur einer elektrischen Maschine zu überwachen und Modulationsverfahren sowie Schaltfrequenz für die Ansteuerung innerhalb des Antriebssystems in Abhängigkeit der Rotortemperatur anzupassen.

## Patentansprüche

1. Steuervorrichtung (1) für ein elektrisches Antriebssystem mit einem Stromrichter (2) und einer elektrischen Maschine (3), wobei die Steuervorrichtung (1) umfasst:
eine Steuereinrichtung (12), die dazu ausgelegt ist, Steuersignale zur Ansteuerung des Spannungswandlers (2) gemäß einem vorbestimmten Modulationsverfahren zu generieren und an dem Spannungswandler (2) bereitzustellen,
wobei die Steuervorrichtung (1) eine Überwachungseinrichtung (11) umfasst, die dazu ausgelegt ist, eine Temperatur in einem Rotor der elektrischen Maschine (3) zu ermitteln; **dadurch gekennzeichnet, daß**
die Steuereinrichtung (12) dazu ausgelegt ist, das Modulationsverfahren unter Verwendung der ermittelten Temperatur in dem Rotor anzupassen und eine Schaltfrequenz der Steuersignale zur Ansteuerung des Spannungswandlers (2) zu erhöhen, falls die Temperatur in dem Rotor der elektrischen Maschine (3) einen vorgegebenen Grenzwert überschreitet.

2. Steuervorrichtung (1) nach Anspruch 1, wobei die Überwachungseinrichtung dazu ausgelegt ist, die Temperatur in dem Rotor der elektrischen Maschine (3) zu berechnen und/oder unter Verwendung von Messwerten zu bestimmen.

3. Steuervorrichtung (1) nach einem der Ansprüche 1 und 2, wobei die Steuereinrichtung (12) dazu ausgelegt ist, die Schaltfrequenz der Steuersignal zu Ansteuerung des Spannungswandler (2) innerhalb eines vorbestimmten Regelbereiches einzustellen, und wobei die Steuereinrichtung (12) dazu ausgelegt ist, den vorbestimmten Regelbereich unter Verwendung der Temperatur in dem Rotor der elektrischen Maschine (3) anzupassen.

4. Steuervorrichtung (1) nach einem der Ansprüche 1 bis 3, wobei die Steuereinrichtung (12) dazu ausgelegt ist, in Abhängigkeit der ermittelten Temperatur im Rotor der elektrischen Maschine (3) zwischen mehreren vorgegebenen Modulationsverfahren zu wechseln.

5. Steuervorrichtung (1) nach einem der Ansprüche 1 bis 4, wobei die Steuereinrichtung (12) dazu ausgelegt ist, einen Grad der Übermodulation für die Ansteuerung des Spannungswandlers (2) unter Verwendung der ermittelten Temperatur in dem Rotor der elektrischen Maschine (3) anzupassen.

6. Steuervorrichtung (1) nach einem der Ansprüche 1 bis 5, wobei die Steuereinrichtung dazu ausgelegt ist, das Modulationsverfahren unter Verwendung mindestens eines weiteren Parameters anzupassen.

7. Elektrisches Antriebssystem, mit:
einer elektrischen Maschine (3);
einem Stromrichter (2), der dazu ausgelegt ist, die elektrische Maschine (3) anzusteuern; und
einer Steuervorrichtung (1) nach einem der Ansprüche 1 bis 6.

8. Verfahren zur Ansteuerung eines elektrischen Antriebssystems mit einem Stromrichter (2) und einer elektrischen Maschine (3), mit den Schritten:
Betreiben (S1) des Spannungswandlers (2) mit einem vorbestimmten Modulationsverfahren;
und
Ermitteln (S2) einer Temperatur in einem Rotor der elektrischen Maschine (3);
**gekennzeichnet durch**
Anpassen (S3) des Modulationsverfahrens unter Verwendung der ermittelten Temperatur in dem Rotor der elektrischen Maschine (3),
Erhöhen einer Schaltfrequenz der Steuersignale zur Ansteuerung des Spannungswandlers (2), falls die Temperatur in dem Rotor der elektrischen Maschine (3) einen vorgegebenen Grenzwert überschreitet.

## Claims

1. Control apparatus (1) for an electric drive system comprising a converter (2) and an electric machine (3), wherein the control apparatus (1) comprises:
a control device (12), which is designed to generate control signals for driving the voltage transformer (2) in accordance with a predetermined modulation method and to provide the control signals to the voltage transformer (2),
wherein the control apparatus (1) comprises a monitoring device (11), which is designed to ascertain a temperature in a rotor of the electric machine (3); **characterized in that**
the control device (12) is designed to adapt the modulation method using the ascertained temperature in the rotor and to increase a switching frequency of the control signals for driving the voltage transformer (2) if the temperature in the rotor of the electric machine (3) exceeds a predefined limit value.

2. Control apparatus (1) according to Claim 1, wherein the monitoring device is designed to calculate the temperature in the rotor of the electric machine (3) and/or to determine the temperature using measurement values.

3. Control apparatus (1) according to either of Claims 1 and 2, wherein the control device (12) is designed to adjust the switching frequency of the control signals for driving the voltage transformer (2) within a predetermined control range, and wherein the control device (12) is designed to adapt the predetermined control range using the temperature in the rotor of the electric machine (3).

4. Control apparatus (1) according to any of Claims 1 to 3, wherein the control device (12) is designed to change between several predefined modulation methods depending on the ascertained temperature in the rotor of the electric machine (3).

5. Control apparatus (1) according to any of Claims 1 to 4, wherein the control device (12) is designed to adapt a degree of overmodulation for driving the voltage transformer (2) using the ascertained temperature in the rotor of the electric machine (3).

6. Control apparatus (1) according to any of Claims 1 to 5, wherein the control device is designed to adapt the modulation method using at least one further parameter.

7. Electric drive system, comprising:
an electric machine (3);
a converter (2), which is designed to drive the electric machine (3); and
a control apparatus (1) according to any of Claims 1 to 6.

8. Method for driving an electric drive system comprising a converter (2) and an electric machine (3), comprising the steps of:
operating (S1) the voltage transformer (2) with a predetermined modulation method;
and
ascertaining (S2) a temperature in a rotor of the electric machine (3);
**characterized by**
adapting (S3) the modulation method using the ascertained temperature in the rotor of the electric machine (3),
increasing a switching frequency of the control signals for driving the voltage transformer (2) if the temperature in the rotor of the electric machine (3) exceeds a predefined limit value.

## Revendications

1. Arrangement de commande (1) pour un système d'entraînement électrique comprenant un convertisseur statique (2) et une machine électrique (3), l'arrangement de commande (1) comprenant :
un dispositif de commande (12) qui est conçu pour générer et fournir au convertisseur de tension (2) des signaux de commande destinés à commander le convertisseur de tension (2) selon un procédé de modulation prédéterminé,
l'arrangement de commande (1) comprend un dispositif de surveillance (11) qui est conçu pour déterminer une température dans un rotor de la machine électrique (3) ; **caractérisé en ce que**
le dispositif de commande (12) est conçu pour adapter le procédé de modulation en utilisant la température déterminée dans le rotor et pour augmenter une fréquence de commutation des signaux de commande destinés à commander le transformateur de tension (2) dans le cas où la température dans le rotor de la machine électrique (3) dépasse une valeur limite prédéfinie.

2. Arrangement de commande (1) selon la revendication 1, le dispositif de surveillance étant conçu pour calculer la température dans le rotor de la machine électrique (3) et/ou pour la déterminer en utilisant des valeurs mesurées.

3. Arrangement de commande (1) selon l'une des revendications 1 et 2, le dispositif de commande (12) étant conçu pour régler la fréquence de commutation du signal de commande destiné à commander le transformateur de tension (2) à l'intérieur d'une plage de régulation prédéterminée, et le dispositif de commande (12) étant conçu pour adapter la plage de régulation prédéterminée en utilisant la température dans le rotor de la machine électrique (3).

4. Arrangement de commande (1) selon l'une des revendications 1 à 3, le dispositif de commande (12) étant conçu pour alterner entre plusieurs procédés de modulation prédéfinis en fonction de la température déterminée dans le rotor de la machine électrique (3).

5. Arrangement de commande (1) selon l'une des revendications 1 à 4, le dispositif de commande (12) étant conçu pour adapter un degré de surmodulation pour la commande du transformateur de tension (2) en utilisant la température déterminée dans le rotor de la machine électrique (3).

6. Arrangement de commande (1) selon l'une des revendications 1 à 5, le dispositif de commande étant conçu pour adapter le procédé de modulation en utilisant au moins un paramètre supplémentaire.

7. Système d'entraînement électrique, comprenant :
une machine électrique (3) ;
un convertisseur statique (2), qui est conçu pour commander la machine électrique (3) ; et
un arrangement de commande (1) selon l'une des revendications 1 à 6.

8. Procédé de commande d'un système d'entraînement électrique comprenant un convertisseur statique (2) et une machine électrique (3), comprenant les étapes suivantes :
mise en fonctionnement (S1) du transformateur de tension (2) avec un procédé de modulation prédéterminé ;
et
détermination (S2) d'une température dans un rotor de la machine électrique (3) ; **caractérisé par**
adaptation (S3) du procédé de modulation en utilisant la température déterminée dans le rotor de la machine électrique (3),
augmentation d'une fréquence de commutation des signaux de commande destinés à la commande du transformateur de tension (2) dans le cas où la température dans le rotor de la machine électrique (3) dépasse une valeur limite prédéfinie.
